# EUROPEAN PATENT APPLICATION

(11) **EP 4 461 624 A1**
(43) Date of publication of application: **13.11.2024**
(21) Application number: 23172410.5
(22) Date of filing: 09.05.2023
(51) Int. Cl.: B62D 21/15, B62D 25/08, B62D 27/06, B62D 29/00

(54) **CONNECTING ORGAN FOR MOTOR VEHICLE ASSEMBLY**

(71) Applicant: Constellium Singen GmbH, 78224 Singen (DE)
(72) Inventor: GRBAVAC, Ivan, 78333 STOCKACH (DE); ZECIC, Goran, 78224 SINGEN (DE)
(74) Representative: Constellium - Propriété Industrielle

(57) **Abstract**

The invention concerns a connecting organ (10) for motor vehicle assembly (1), the connecting organ (10) being intended to provide a mechanical binding between a crash box (3) and a front axle carrier of the motor vehicle, the connecting organ (10) defining a first part (30) intended to be inserted in a cavity formed at one end of the front axle carrier and a second part (50) intended to be secured to the crash box (3), the first part (30) delimiting at least one rectilinear attachment orifice (31) extending along a main direction (Y).

The invention also concerns an assembly (1) for motor vehicle comprising at least one front axle carrier, a crash box (3), and such a connecting organ (10).

The invention also concerns a manufacturing process for manufacturing such a connecting organ (10).

## Description

### TECHNICAL FIELD OF THE INVENTION

This invention relates to the field of motor vehicles, and more particularly to assembly for motor vehicle comprising a crash box, an axle carrier, and a connecting organ.

### BACKGROUND

In the field of motor vehicle, it is known to use a crash box attached to an axle carrier, and more particularly to the front axle carriers.

Indeed, the crash box is used to reduce the impact energy in the event of a frontal collision of the motor vehicle. In most cases, the crash box is made of aluminum to achieve the lowest possible weight, while the front axle carrier is made of steel. As a result, there is a risk of contact corrosion between the crash box and the length.

Therefore, to solve this problem, it is common to assemble the crash box made of aluminum only after painting the steel components of the vehicle body. Alternatively, and as disclosed by EP1862377B1, it is possible to use an adaptor between the axle carrier and the crash box.

Although such adaptor allows solving the problem of corrosion, it implies to manufacture a dedicated piece for each type of axle carrier, and for each crash box. Since every vehicle has its own design, it is frequent to use machining to drill the adaptor in order to provide fastening means intended to be used in securing the assembly. Such machining implies to increase the number of manufacturing steps, which increase the overall manufacturing costs.

Besides, the fixation of the adaptor one the one hand to the axle carrier, and on the other hand to the crash box, is not often straightforward, since there is a need to integrate fastening means in both extremities of the adaptor.

As a result, there is a need to find a cost effective solution to manufacture an adaptor that can easily assemble a front axle carrier with a crash box.

### SUMMARY OF THE INVENTION

The present invention aim at solving the aforementioned problems. To this end, the invention concerns a connecting organ for motor vehicle assembly, the connecting organ being intended to provide a mechanical binding between a crash box and a front axle carrier of the motor vehicle, the connecting organ defining a first part intended to be inserted in a cavity formed at one end of the front axle carrier and a second part intended to be secured to the crash box, the first part delimiting at least one rectilinear attachment orifice extending along a main direction, said at least one rectilinear attachment orifice being intended to receive a male member of a fixing element which is capable of ensuring removable fixing of the first part of the connecting organ with the front end of the front axle carrier, the connecting organ being formed by a profile having at least one hollow chamber distinct from the at least one rectilinear attachment orifice, wherein said at least one hollow chamber extends along a direction parallel to the main direction.

The arrangement described above allow to provide a connecting organ between the front axle carrier and the crash box of a motor vehicle with a simplified design. Indeed, providing the at least one rectilinear attachment orifice extending in the same direction as the at least one hollow chamber allows to have a simplified manufacturing process, along with a dedicated organ to connect the axle carrier with the crash box.

It is well understood that the term "profile" corresponds to a piece, which is manufactured with a determined profile and of uniform section. According to one embodiment, the main direction is rectilinear and fixed in a reference frame associated with the connecting organ.

According to an embodiment, the connecting organ comprises on or more of the following features, taken alone or in combination.

According to one embodiment, the connecting organ is formed by a profile having a cylindrical shape.

By "cylindrical shape" or "cylinder", it is meant a volume delimited, between two planes, by a cylindrical surface whose generatrices are parallel to each other. In other words, a cylindrical surface is the surface of space generated by a straight line, called generatrix, which moves in a fixed given direction by resting on a closed curved line called directrix. In summary, the directrix corresponds to the contour of the cross-section viewed perpendicular to the main direction.

According to one embodiment, the profile is a right cylinder. In other words, the ends of the connecting organ are comprised between two parallel planes and the generatrix is perpendicular to these two parallel planes.

Thus, the cutting operations after extrusion are facilitated, and the material losses are limited. It allows to save costs and to reduce the environmental impact of the manufacturing process as much as possible.

According to one embodiment, the connecting organ extends along the main direction between a first end and a second end, and presents a main length counted between the first end and the second end along the main direction.

According to one embodiment, the connecting organ comprises a main portion, which presents, in any plane cutaway sensibly perpendicular to the main direction, an identical cross section. For example, the main portion is comprised between two parallels planes which are perpendicular to the main direction, said two parallels planes being offset from each other by a length superior or equal to 80% of the main length, and more particularly superior or equal to 90% of the main length, and more particularly equal to the main length.

According to one embodiment, the fixing element is a bolt. In mechanics, a bolt is formed by the combination of a screw and a nut engaged on the thread of this screw.

According to one embodiment, the connecting organ and the assembly can be oriented according to the following directions.

Direction X is a longitudinal direction associated with the motor vehicle, corresponding to the front-rear direction of the vehicle in which the vehicle operates its normal movement in forward gear.

Direction Y is a lateral direction associated with the motor vehicle, corresponding to the right-left direction of the vehicle according to which the width of the vehicle is considered.

Advantageously, the main direction is parallel to direction Y.

Direction Z is a transversal direction associated with the motor vehicle, corresponding to the up-down direction of the vehicle according to which the height of the vehicle is considered.

According to an embodiment, the connecting organ is monolithic and extruded, the direction of extrusion being coincident or parallel to the main direction.

In other words, the connecting organ is an extruded one-piece part.

According to an embodiment, the connecting organ is formed from a material comprising aluminum.

According to one embodiment, the material forming the connecting organ consists in aluminum or aluminum alloy.

According to an embodiment, the at least one attachment orifice is a rectilinear channel oriented in the main direction and having, in any plane cutaway perpendicular to the main direction, an identical cross-section.

In other words, the cross-section of the at least one attachment orifice is homogeneous and constant over its entire length. Advantageously, the fact that the attachment orifice is oriented in the same direction as the main direction allows its manufacturing at the same time as the connecting organ as a whole. In particular, in the case where the connecting organ is obtained by extrusion, the attachment orifice is obtained by the extrusion operation, without needing a subsequent machining, which is advantageous for cost reasons, simplicity and logistics.

According to an embodiment, the at least one attachment orifice is configured so as to block the male element bidirectionally in each of at least two different directions oriented transversely to the main direction.

According to one embodiment, the cross-section of the at least one attachment aperture has a shape that is complementary to the cross-section of the male member means that the cross-section of the male member can be inserted into the mentioned cross section.

According to an embodiment, the first part comprises a first tab and a second tab, a first proximal end of the first tab being secured to a second proximal end of the second tab at the level of the second part, said at least one attachment orifice comprising a first attachment orifice delimited by a first distal end of the first tab and a second attachment orifice delimited by a second distal end of the second tab.

According to one embodiment, the first tab and/or the second tab internally delimits at least one cavity arranged in the manner of a hollow reinforcing body.

According to an embodiment, the second part of the connecting organ comprises a plate having a flat surface intended to be fixed, in particular by welding, to the crash box.

According to an embodiment, the plate has larger dimensions, in at least one given direction of adjustment, than dimensions of the zone of the crash box intended to come into contact with the plate.

These provisions make it possible to adjust the relative position between the crash box and the connecting organ according to the given direction of adjustment.

These provisions can be applicable for two different directions of adjustments, in particular in the lateral direction and in the transversal direction. In this case, the plate is larger than the said zone of the crash box on the one hand along the lateral direction and on the other hand along the transversal direction.

According to an embodiment, the second part of the connecting organ comprises an abutment rim, which projects from the plate on the side opposite to the first part of the connecting piece.

Advantageously, said abutment rim allows to adjust the position of the connecting organ with respect with the crash box, for example before welding. Besides, such rim can block a translation of the connecting organ with respect with the crash box. The mechanical resistance of the assembly can therefore be enhanced. These provisions make it possible to facilitate the precise and stable positioning of the connecting organ in the Z direction with respect to the crash box.

According to one embodiment, the second part of the connecting organ comprises the at least one hollow chamber.

According to one embodiment, the at least one hollow chamber is a secondary attachment orifice, preferentially rectilinear, said secondary attachment orifice being intended to receive a secondary male member of a secondary fixing element which is capable of ensuring removable fixing of the second part of the connecting organ with the crash box.

The object of the invention may also be achieved by implementing an assembly for motor vehicle comprising:
- at least one front axle carrier having one front end delimiting a cavity,
- a crash box intended to be connected to a front cross member,
- a connecting organ according to any one of the preceding claims, the first part of which is inserted into said cavity and the second part is fixed to the crash box,
- at least one fixing element having a male member inserted in at least one opening of the front axle carrier and in the at least one attachment orifice of the connecting organ in a way ensuring removable fixing of the first part of the connecting organ with the front end of the at least one front axle carrier.

According to an embodiment, the assembly comprises on or more of the following features, taken alone or in combination.

According to an embodiment, the first part of the connecting organ is inserted into the cavity of the front axle carrier along a longitudinal direction and the main direction associated with the connecting organ is oriented along a lateral direction, the male member of the at least one fixing element and the attachment orifice of the connecting organ being oriented in said lateral direction.

According to one embodiment, the lateral direction is sensibly perpendicular to the longitudinal direction.

According to an embodiment, the connecting organ comprises two separate attachment orifices offset from one another in a transverse direction.

According to one embodiment, the transversal direction is sensibly perpendicular to the longitudinal direction, and to the lateral direction.

The object of the invention may also be achieved by implementing a manufacturing process for manufacturing a connecting organ as described above, the manufacturing process comprising:
- an extrusion step at the end of which is obtained an intermediate extruded product having a rectilinear extrusion direction presenting, in any plane cutaway perpendicular to the extrusion direction, an identical cross-section; then
- a cutting step consisting in cutting the intermediate extruded product previously obtained in at least one cutting plane oriented transversely to the direction of extrusion, in a way making it possible to obtain at least one connecting organ whose main direction coincides with the direction of extrusion.

According to one embodiment, each cutting plane is oriented perpendicular to the direction of extrusion.

According to one embodiment the at least one attachment orifice of the connecting organ is obtained and formed, for each connecting organ, at the end of the extrusion step.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically, a sectional view and a perspective view of the assembly according to one particular embodiment of the invention.
Figure 2 represents schematically, an exploded view in perspective, of the assembly of figure 1.
Figure 3 represents schematically, a sectional view and a perspective view of the connecting organ of figure 1 and 2.
Figure 4 represents schematically, a sectional view and a perspective view of the assembly according to a second particular embodiment of the invention.
Figure 5 represents schematically, an exploded view in perspective, of the assembly of figure 4.
Figure 6 represents schematically, a sectional view and a perspective view of the connecting organ of figure 4 and 5.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

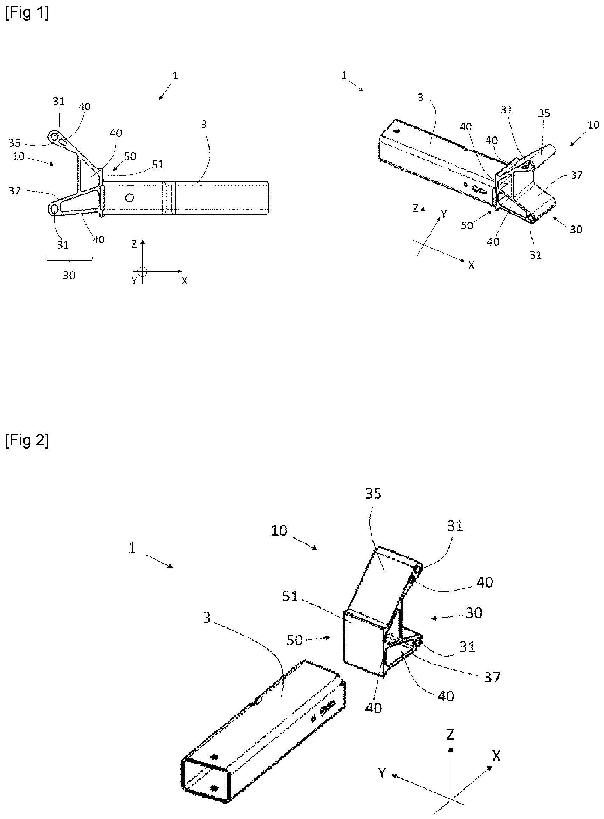

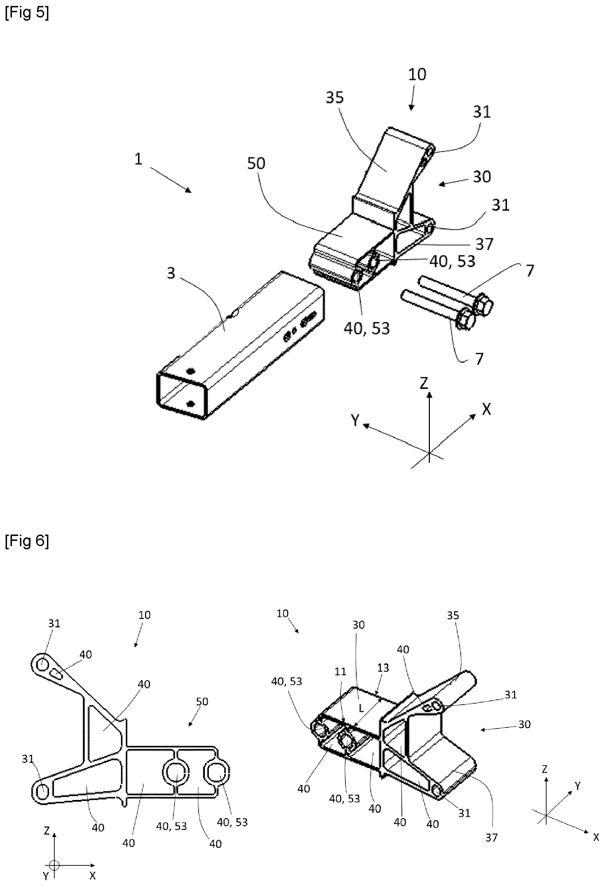

As illustrated on figures 1 to 6, the invention concerns a connecting organ 10 for motor vehicle assembly 1. The invention also concerns an assembly 1 for motor vehicle. The assembly 1 comprises at least one front axle carrier having one front end delimiting a cavity, a crash box 3 intended to be connected to a front cross member, a connecting organ 10 that will be described more in details below, and at least one fixing element. The at least one fixing element has a male member inserted in at least one opening of the front axle carrier and in at least one attachment orifice of the connecting organ 10 in a way ensuring removable fixing of the first part 30 of the connecting organ 10 with the front end of the at least one front axle carrier.

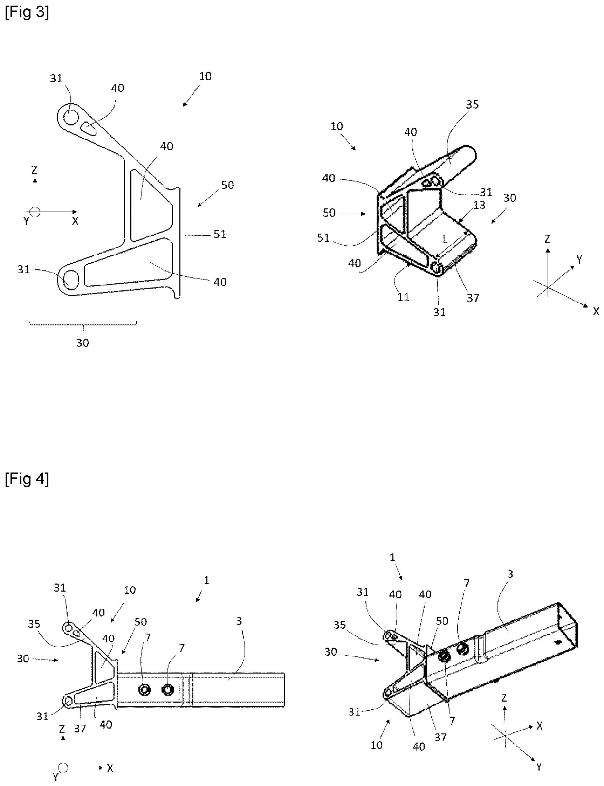

The assembly 1 is illustrated on the figures according to two different variants, the first one being represented on figures 1 to 3, and the second one being represented on figures 4 to 6. It is however well understood that the two variants are not limiting, and that the invention can be performed through other variants not represented, and combining certain aspects of the two represented variants.

As indicated before, the connecting organ 10 for motor vehicle assembly 1 is intended to provide a mechanical binding between the crash box 3 and the front axle carrier of the motor vehicle. To this end, the connecting organ 10 defines the first part 30 which is intended to be inserted in the cavity formed at one end of the front axle carrier, and defines a second part 50 intended to be secured to the crash box 3. For clarity, the at least one axle carrier has not been represented on the figures, but it may be disposed around the first part 30 of each illustrated connecting organ 10.

According to one embodiment, the connecting organ 10 and the assembly 1 can be oriented according to the following directions:
- Direction X is a longitudinal direction associated with the motor vehicle, and corresponds to the front-rear direction of the vehicle in which the vehicle operates its normal movement in forward gear.
- Direction Y is a lateral direction associated with the motor vehicle, and corresponds to the right-left direction of the vehicle according to which the width of the vehicle is considered.
- Direction Z is a transversal direction associated with the motor vehicle, and corresponds to the up-down direction of the vehicle according to which the height of the vehicle is considered.

Generally, and as illustrated on the figures, the lateral direction is sensibly perpendicular to the longitudinal direction, and the transversal direction is sensibly perpendicular to the longitudinal direction, and to the lateral direction.

The connecting organ 10 may extends along a main direction preferably parallel to direction Y. Thus, in the rest of the description, the main direction will be noted "Y". The main direction Y is generally rectilinear and fixed in a reference frame associated with the connecting organ 10. The connecting organ 10 can extends between a first end 11 and a second end 13, and may presents a main length L counted between the first end 11 and the second end 13 along the main direction Y. As it can be seen on the pictures the connecting organ 10 may comprise a main portion, which presents, in any plane cutaway sensibly perpendicular to the main direction Y, an identical cross section. For example, the main portion is comprised between two parallels planes which are perpendicular to the main direction Y, said two parallels planes being offset from each other by a length superior or equal to 80% of the main length L, and more particularly superior or equal to 90% of the main length L, and more particularly equal to the main length L.

According to one embodiment, the connecting organ 10 is formed by a profile having a cylindrical shape. It is well understood that the term "profile" corresponds to a piece, which is manufactured with a determined profile and of uniform section. By "cylindrical shape" or "cylinder", it is meant a volume delimited, between two planes, by a cylindrical surface whose generatrices are parallel to each other. In other words, a cylindrical surface is the surface of space generated by a straight line, called generatrix, which moves in a fixed given direction by resting on a closed curved line called directrix. In summary, the directrix corresponds to the contour of the cross-section viewed perpendicular to the main direction Y. More preferably, said profile is a right cylinder. In other words, the ends of the connecting organ 10 are comprised between two parallel planes and the generatrix is perpendicular to these two parallel planes.

To facilitate manufacturing, it is preferred that the connecting organ 10 is monolithic and extruded, the direction of extrusion being coincident or parallel to the main direction Y.

In other words, the connecting organ 10 is an extruded one-piece part. The material constituting the connecting organ may comprises aluminum. For example, the connecting organ 10 consists in aluminum or aluminum alloy. Thus, the cutting operations after extrusion are facilitated, and the material losses are limited. It allows to save costs and to reduce the environmental impact of the manufacturing process as much as possible.

The arrangement described above allows the first part 30 of the connecting organ 10 to be inserted into the cavity of the front axle carrier along the longitudinal direction X. The main direction Y associated with the connecting organ 10 is then oriented along the lateral direction Y.

As illustrated on figures 1 to 6, the first part 30 delimits at least one rectilinear attachment orifice 31 extending along the main direction Y. The at least one attachment orifice 31 may be a rectilinear channel oriented in the main direction Y and having, in any plane cutaway perpendicular to the main direction Y, an identical cross-section. In other words, the cross-section of the at least one attachment orifice 31 is homogeneous and constant over its entire length. Advantageously, the fact that the attachment orifice 31 is oriented in the same direction as the main direction Y allows its manufacturing at the same time as the connecting organ 10 as a whole. In particular, in the case where the connecting organ 10 is obtained by extrusion, the attachment orifice 31 is obtained by the extrusion operation, without needing a subsequent machining, which is advantageous for cost reasons, simplicity and logistics.

On each variant represented on the figures represents a connecting organ 10 with two separate attachment orifices 31 offset from one another in a transverse direction. However, the invention may be implemented with only one attachment orifice 31, or with more than two attachment orifices 31. Said at least one rectilinear attachment orifice 31 is intended to receive a male member of a fixing element (not represented). The fixing element is generally a bolt, and the male member of the at least one fixing element and the attachment orifice of the connecting organ 10 are generally oriented in the lateral direction. In mechanics, a bolt is formed by the combination of a screw and a nut engaged on the thread of this screw. Thus the attachment orifice 31 is capable of ensuring removable fixing of the first part 30 of the connecting organ 10 with the front end of the front axle carrier. In can be advantageous that the at least one attachment orifice 31 is configured so as to block the male element bidirectionally in each of at least two different directions oriented transversely to the main direction Y. Moreover, to allow a good cooperation between the attachment orifice 31 and the male member, the cross section of the at least one attachment orifice 31 may have a shape complementary to the cross section of the male member, subject to the presence of a functional clearance making it possible to insert the male member into the orifice 31.

The first part 30 may comprise a first tab 35 and a second tab 37. A first proximal end of the first tab 35 being secured to a second proximal end of the second tab 37 at the level of the second part 50. The at least one attachment orifice 31 may comprises a first attachment orifice delimited by a first distal end of the first tab 35 and a second attachment orifice delimited by a second distal end of the second tab 37.

The connecting organ 10 is formed by a profile having at least one hollow chamber 40 distinct from the at least one rectilinear attachment orifice 31. The at least one hollow chamber 40 extends along a direction parallel to the main direction Y. The first tab 35 and/or the second tab 37 can internally delimit at least one of the hollow chambers 40 arranged in the manner of a hollow reinforcing body. The first variant illustrated on figure 1 to 3 shows a connecting organ 10 comprising three hollow chambers, with one of them located on the first tab 35. The second variant illustrated on figure 4 to 6 shows a connecting organ 10 comprising seven hollow chambers, three of them being disposed on the first part 30, and four of them being located on the second part 50.

Referring to the first variant represented on figure 1 to 3, the second part 50 of the connecting organ 10 can comprise a plate 51 having a flat surface intended to be fixed, in particular by welding, to the crash box 3. For example, the plate 51 has larger dimensions, in at least one given direction of adjustment, than dimensions of the zone of the crash box 3 intended to come into contact with the plate 51. These provisions make it possible to adjust the relative position between the crash box 3 and the connecting organ 10 according to the given direction of adjustment. These provisions can be applicable for two different directions of adjustments, in particular in the lateral direction and in the transversal direction. In this case, the plate 51 is larger than said zone of the crash box 3 on the one hand along the lateral direction and on the other hand along the transversal direction. It is also possible (not represented) that the second part 50 of the connecting organ 10 comprises an abutment rim, which projects from the plate 51 on the side opposite to the first part 30 of the connecting organ 10. Advantageously, said abutment rim allows to adjust the position of the connecting organ 10 with respect with the crash box 3, for example before welding. Besides, such rim can block a translation of the connecting organ 10 with respect with the crash box 3. The mechanical resistance of the assembly 1 can therefore be enhanced. These provisions make it possible to facilitate the precise and stable positioning of the connecting organ 10 in the Z direction with respect to the crash box 3.

According to the second variant represented on figures 4 to 6, two of the seven hollow chambers 40 are secondary attachment orifice 53 disposed on the second part 50 of the connecting organ10. Preferentially those secondary attachment orifices 53 are rectilinear. The second part 50 can be inserted inside the crash box 3. Thus, each secondary attachment orifice 53 may be configured to receive a secondary male member of a secondary fixing element 7 which is capable of ensuring removable fixing of the second part 50 of the connecting organ 10 with the crash box 3. Thus is is possible to avoid using welding to secure the connecting organ 10 to the crash box 3.

The arrangement described above allow to provide a connecting organ 10 between the front axle carrier and the crash box 3 of a motor vehicle with a simplified design. Indeed, providing the at least one rectilinear attachment orifice 31 extending in the same direction as the at least one hollow chamber 40 i.e. the same direction as the extension direction of the profile, allows to have a simplified manufacturing process, along with a dedicated organ to connect the axle carrier with the crash box 3.

The invention also concerns a manufacturing process for manufacturing such a connecting organ 10.

The manufacturing process comprises an extrusion step at the end of which is obtained an intermediate extruded product having a rectilinear extrusion direction presenting, in any plane cutaway perpendicular to the extrusion direction, an identical cross-section.

Then, the manufacturing process comprises a cutting step consisting in cutting the intermediate extruded product previously obtained in at least one cutting plane oriented transversely to the direction of extrusion, in a way making it possible to obtain at least one connecting organ 10 whose main direction Y coincides with the direction of extrusion. For example each cutting plane is oriented perpendicular to the direction of extrusion. The at least one attachment orifice of the connecting organ 10 may be obtained and formed, for each connecting organ 10, at the end of the extrusion step.

## Claims

1. Connecting organ (10) for motor vehicle assembly (1), the connecting organ (10) being intended to provide a mechanical binding between a crash box (3) and a front axle carrier of the motor vehicle, the connecting organ (10) defining a first part (30) intended to be inserted in a cavity formed at one end of the front axle carrier and a second part (50) intended to be secured to the crash box (3), the first part (30) delimiting at least one rectilinear attachment orifice (31) extending along a main direction (Y), said at least one rectilinear attachment orifice (31) being intended to receive a male member of a fixing element which is capable of ensuring removable fixing of the first part (30) of the connecting organ (10) with the front end of the front axle carrier, the connecting organ (10) being formed by a profile having at least one hollow chamber (40) distinct from the at least one rectilinear attachment orifice (31), wherein said at least one hollow chamber (40) extends along a direction parallel to the main direction (Y).

2. Connecting organ (10) according to claim 1, wherein the connecting organ (10) is monolithic and extruded, the direction of extrusion being coincident or parallel to the main direction (Y).

3. Connecting organ (10) according to any one of claims 1 or 2 wherein the connecting organ (10) is formed from a material comprising aluminum.

4. Connecting organ (10) according to any one of claims 1 to 3, wherein the at least one attachment orifice (31) is a rectilinear channel oriented in the main direction (Y) and having, in any plane cutaway perpendicular to the main direction (Y), an identical cross-section.

5. Connecting organ (10) according to any one of claims 1 to 4, wherein the at least one attachment orifice (31) is configured so as to block the male element bidirectionally in each of at least two different directions oriented transversely to the main direction (Y).

6. Connecting organ (10) according to any one of claims 1 to 5, wherein the first part (30) comprises a first tab (35) and a second tab (37), a first proximal end of the first tab (35) being secured to a second proximal end of the second tab (37) at the level of the second part (50), said at least one attachment orifice (31) comprising a first attachment orifice delimited by a first distal end of the first tab (35) and a second attachment orifice delimited by a second distal end of the second tab (37).

7. Connecting organ (10) according to any one of claims 1 to 6, wherein the second part (50) of the connecting organ (10) comprises a plate (51) having a flat surface intended to be fixed, in particular by welding, to the crash box (3).

8. Connecting organ (10) according to claim 7, wherein the plate (51) has larger dimensions, in at least one given direction of adjustment, than dimensions of the zone of the crash box (3) intended to come into contact with the plate (51).

9. Connecting organ (10) according to any one of claims 7 or 8, wherein the second part (50) of the connecting organ (10) comprises an abutment rim, which projects from the plate (51) on the side opposite to the first part (30) of the connecting piece.

10. Assembly (1) for motor vehicle comprising:
- at least one front axle carrier having one front end delimiting a cavity,
- a crash box (3) intended to be connected to a front cross member,
- a connecting organ (10) according to any one of the preceding claims, the first part (30) of which is inserted into said cavity and the second part (50) is fixed to the crash box (3),
- at least one fixing element having a male member inserted in at least one opening of the front axle carrier and in the at least one attachment orifice of the connecting organ (10) in a way ensuring removable fixing of the first part (30) of the connecting organ (10) with the front end of the at least one front axle carrier.

11. Assembly (1) according to claim 10, wherein the first part (30) of the connecting organ (10) is inserted into the cavity of the front axle carrier along a longitudinal direction and the main direction (Y) associated with the connecting organ (10) is oriented along a lateral direction, the male member of the at least one fixing element and the attachment orifice of the connecting organ (10) being oriented in said lateral direction.

12. Assembly (1) according to any one of claims 10 or 11, wherein the connecting organ (10) comprises two separate attachment orifices (31) offset from one another in a transverse direction.

13. Manufacturing process for manufacturing a connecting organ (10) according to any one of claims 1 to 9 for an assembly (1), the manufacturing process comprising:
- an extrusion step at the end of which is obtained an intermediate extruded product having a rectilinear extrusion direction presenting, in any plane cutaway perpendicular to the extrusion direction, an identical cross-section; then
- a cutting step consisting in cutting the intermediate extruded product previously obtained in at least one cutting plane oriented transversely to the direction of extrusion, in a way making it possible to obtain at least one connecting organ (10) whose main direction (Y) coincides with the direction of extrusion.
